# EUROPÄISCHE PATENTSCHRIFT

(11) **EP 2 121 379 B1**
(45) Veröffentlichungstag und Bekanntmachung des Hinweises auf die Patenterteilung: **13.04.2016**
(21) Anmeldenummer: 08707426.6
(22) Anmeldetag: 31.01.2008
(51) Int. Cl.: B60N 2/48

(54) **AKTUIERUNGSMITTEL FÜR EINE CRASH-AKTIVE KOPFSTÜTZE**
ACTUATING MEANS FOR A CRASH-ACTIVE HEAD RESTRAINT
MOYEN D'ACTIONNEMENT POUR APPUI-TÊTE ACTIF EN CAS DE COLLISION

(30) Priorität: 07.02.2007 DE 102007006835
(43) Veröffentlichungstag der Anmeldung: 25.11.2009
(73) Patentinhaber: Johnson Controls GmbH, 51399 Burscheid (DE)
(72) Erfinder: GÜNTHER, Benjamin, 42719 Solingen (DE); SPERLING, Klaus, 53175 Bonn (DE); THIES, Marcus, 58285 Gevelsberg (DE); HARTLAUB, Silvio, 50259 Pulheim (DE); HESTERBERG, Joshua, 40822 Mettmann (DE)
(74) Vertreter: Hemmelmann, Klaus
(86) Internationale Anmeldenummer: PCT/EP2008/000734
(87) Internationale Veröffentlichungsnummer: WO 2008/095636

(56) Entgegenhaltungen:
- EP-A- 1 625 970
- WO-A-2006/037801
- DE-B3-102006 036 623

## Beschreibung

Die Erfindung betrifft ein Aktuierungsmittel für die Kopfstütze eines Fahrzeugsitzes, welche bei einem Unfall zumindest in Teilen aus einer Komfortstellung in eine Sicherheitsstellung verlagerbar ist, mit Schenkeln, welche infolge Druckbelastung von einer Initialstellung aus gespreizt werden und damit eine auf Kraftübertragungsmittel übertragbare Längung bewirken, wobei die Schenkel untereinander und/oder an Befestigungselementen durch Gelenke verbunden sind.

### Stand der Technik

Ein gattungsgemäßes Aktuierungsmittel ist aus der Druckschrift EP 1 625 970 A1 bekannt. Eine weiteres Aktuierungsmittel aus der Druckschrift WO 2006/037801 A1 besteht aus vier gelenkig miteinander verbundenen Schenkeln, die W-förmig gefaltet sind und von denen der erste Schenkel die Hülle und der letzte Schenkel die Seele eines Bowdenzugs fasst. Bei einer auf das Aktuierungsmittel wirkenden, orthogonal zur Erstreckung des Bowdenzugs verlaufenden Druckbelastung wird der Schenkelzug gestreckt, wodurch sich die Winkel zwischen den Schenkeln vergrößern und die Seele des Bowdenzugs um eine bestimmte Länge aus der Hülle des Bowdenzugs herausgezogen wird. Diese Verlagerung wird auf die Antriebseinrichtung der crash-aktiven Kopfstütze übertragen, die beispielsweise der Ausbildung nach WO 2005/097545 A2 entsprechen kann.

### Aufgabe

Der Erfindung liegt die Aufgabe zugrunde, das vorbekannte Aktuierungsmittel weiter zu verbessern, insbesondere hinsichtlich Bauraum, Fertigungskosten und Einsatzbreite.

### Lösung

Die Aufgabe wird bei gattungsgemäßen Aktuierungseinrichtungen dadurch gelöst, dass die Gelenke jeweils einen langen Gelenkzapfen und einen kurzen Gelenkzapfen aufweisen, welche zur Ausbildung der Gelenke axial in Bohrungen einführbar sind.

Vorzugsweise können die äußeren Schenkel Vorsprünge aufweisen, welche die Metallstruktur des Fahrzeugsitzes insbesondere im Bereich eines Querträgers von der Insassenseite her nach hinten durchdringen und zur Anbringung eines Kraftübertragungsmittels, insbesondere von Seele und Hülle eines Bowdenzugs, geeignet sind.

Derartige Aktuierungsmittel sind mit Vorteil in der Metallstruktur des Fahrzeugsitzes verrastbar und können somit einfach montiert werden.

Mit besonderem Vorteil ist das Aktuierungsmittel an einem Querträger aus Metall anbringbar, welcher nachträglich mit einer ansonsten vorgefertigten Metallstruktur einer Rückenlehne verbindbar ist. Bei dieser Ausbildung kann eine Anordnung bei der JIT-Fertigung an die individuelle Anforderung angepasst werden, ohne dass die nicht entsprechend ausgestatteten Sitze mit Komponenten belastet werden, die nur für die Anwendung der Erfindung erforderlich sind.

Die Schenkel bestehen vorzugsweise aus spritzgegossenen, rahmenartigen Elementen, welche im inneren des Rahmens mit wabenartigen Stützrippen versehen sind. Das Aktuierungsmittel lässt sich hierdurch in wesentlichen Teilen einfach, leicht und haltbar herstellen.

Bevorzugt ist eine gerade Zahl von Schenkeln vorgesehen, wobei das mittlere Gelenk gegenüber der Rückenlehne ortsfest ausgebildet ist. Das Aufspreizen des Aktuierungsmittel erfolgt damit symmetrisch zum linken und rechten Seitenholm der Lehnenstruktur hin.

### Figuren

Die Figuren stellen beispielhaft und schematisch verschiedene Ausführungen der Erfindung dar.

Es zeigen:
- Fig. 1: eine dreidimensionale Ansicht eines erfindungsgemäßen Aktuierungsmittels mit transparent dargestellter Prallplatte,
- Fig. 2: dasselbe Aktuierungsmittel mit abgenommener Prallplatte,
- Fig. 3: Schenkel und Befestigungselement in gesonderter Darstellung,
- Fig. 4: einen zur Aufnahme des Aktuierungsmittels geeigneten Querträger in gesonderter Darstellung,

- Fig. 5: die äußeren Schenkel eines Aktuierungsmittels nach einer anderen Ausführung der Erfindung.

Die Richtungsangaben beziehen sich, sofern nichts Gegenteiliges ausgesagt ist, auf die Position des verbauten Aktuierungsmittels bei aufrecht stehender Rückenlehne.

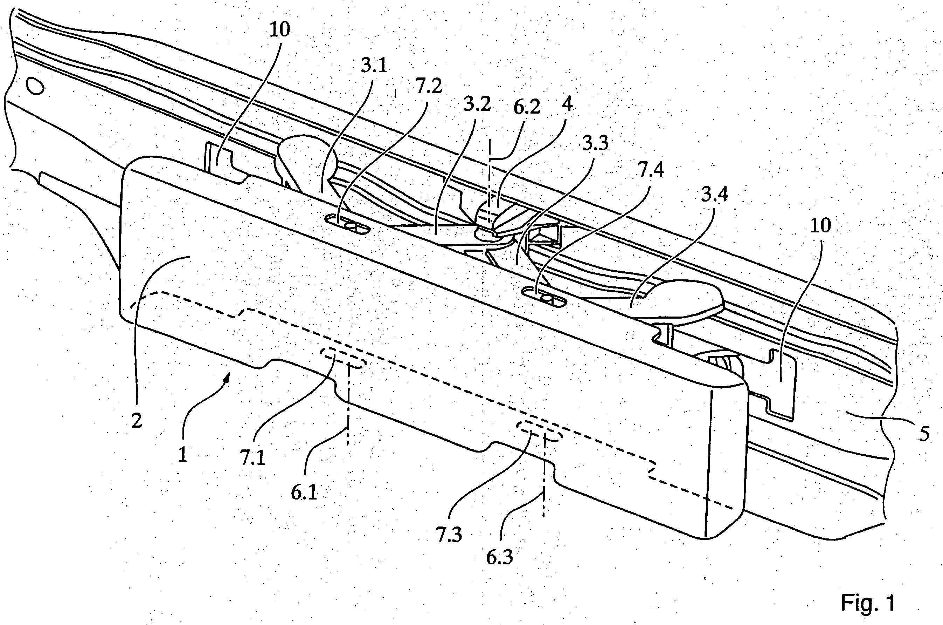

Das in Fig. 1 gezeigte Aktuierungsmittel 1 besteht aus einer Prallplatte 2, Schenkeln 3.1 bis 3.4 sowie einem zentralen Befestigungselement 4, welche vorzugsweise durch Spitzgießen von Kunststoff gefertigt werden. Das Aktuierungsmittel 1 ist an einem aus Metall bestehenden Querträger 5 befestigt, welcher integraler Bestandteil der Metallstruktur der Rückenlehne des Fahrzeugsitzes ist oder aber nachträglich auf die im Übrigen bereits gefertigte Metallstruktur aufgesetzt wird. Das Befestigungselement 4 ist am Querträger 5 verankert und damit gegenüber der Rückenlehne ortsfest.

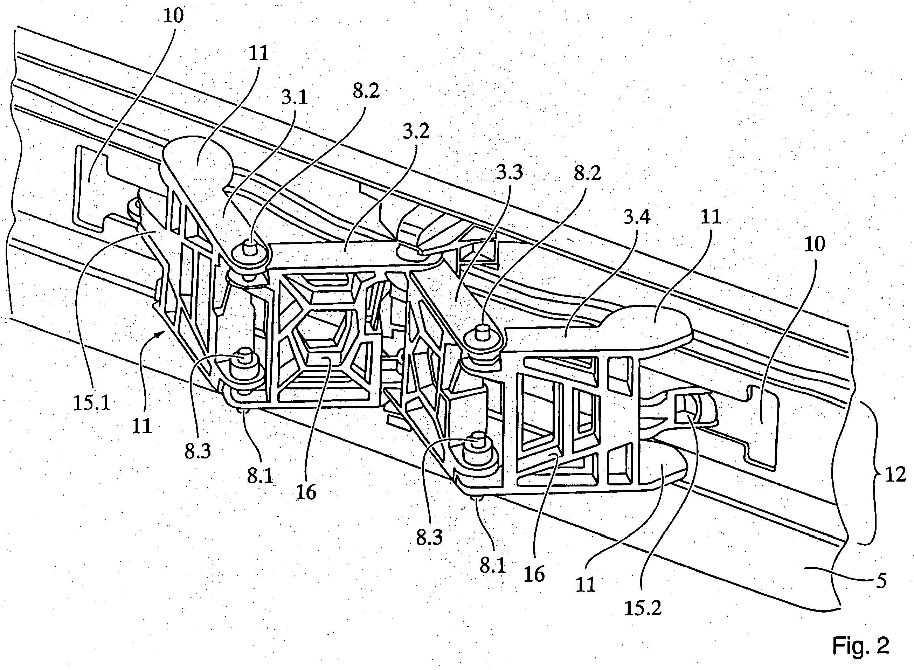

Die mittleren Schenkel 3.2 und 3.3 bilden mit dem Befestigungselement 4 ein gemeinsames Gelenk 6.2 aus und erstrecken sich von dort aus zur Seite in Richtung der Enden des Querträgers 5 sowie nach vorne zur Prallplatte 2. Die seitlichen Schenkel 3.1 und 3.4 sind über Gelenke 6.1 beziehungsweise 6.3 mit den mittleren Schenkeln 3.2 beziehungsweise 3.3 verbunden und im Bereich dieser Gelenke 6.1 und 6.3 in schlitzförmigen Kulissen 7.1 bis 7.4 geführt, welche aus den oberen und unteren horizontalen Kantenflächen der sich im Wesentlichen vertikal erstreckenden Prallplatte 2 ausgenommen sind. Bei einer Streckung des Schenkelzuges verlagern sich die im Bereich der Gelenke 6.1 und 6.3 an die Schenkel 3.2 und 3.4 angeformten Zapfen 8.1 und 8.2 (siehe Fig. 2) in den Kulissen 7.1 bis 7.4.

Die mit ihren außenseitigen Enden von der Prallplatte 2 weg nach außen in Richtung des Querträgers 5 weisenden äußeren Schenkel 3.1 und 3.4 sind an diesen Enden mit zentralen Vorsprüngen 15.1, 15.2 ausgestattet, welche schlitzförmige Ausnehmungen 10 im Querträger 5 durchdringen und zur Anbringung der nicht gezeigten, zylinderförmigen Endfittinge der Seele (Vorsprung 15.1 des Schenkels 3.1 mit Ausnehmung 17) beziehungsweise der Hülle (Vorsprung 15.2 des Schenkels 3.4 mit Aufnahme 18) eines Bowdenzugs vorgesehen sind. Außenseitig weisen die Ausnehmungen 10 T-förmige Erweiterungen auf, welche der Durchführung der Vorsprünge 15.1, 15.2 bei der Montage der Schenkel 3.1 und 3.4 dienen. Die Schenkel 3.1 und 3.4 sind ferner außen an Ober- und Unterseite mit flachen, horizontal verlaufenden Projektionen 11 versehen, welche eine U-förmige Abkantung 12 im Querträger 5 von oben und unten umgreifen und den Schenkelzug damit streckbar führen. Außerdem weisen die Schenkel 3.1 bis 3.4 eine rahmenartige Struktur mit darin verlaufenden wabenartigen Stützrippen 16 auf, welche den Schenkeln 3.1 bis 3.4 bei geringem Gewicht eine hohe mechanische Festigkeit verleihen.

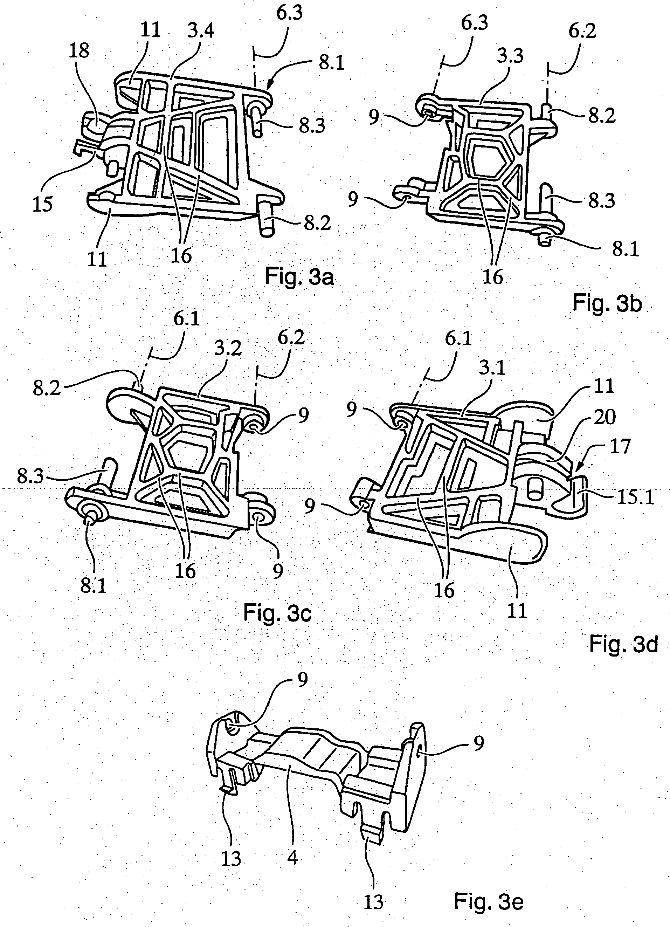

Wie aus Fig. 3 a bis d ersichtlich, bestehen die Gelenke 6.1 bis 6.3 aus an den Schenkeln 3.2 bis 3.4 angeformten Zapfen 8.2 und 8.3, welche in Bohrungen 9 des jeweils anderen Schenkels 3.1 bis 3.3 sowie des zentralen Befestigungselements 4 (Fig. 3e) einsetzbar sind. Die Zapfen 8.2 und 8.3 sind hinsichtlich ihrer Länge so gestaltet, dass das nachfolgend aus der Bohrung 9 herausragende Ende des Zapfens 8.2 noch ausreichend lang ist, um eine Führung in der Kulisse 7.4 bzw. 7.2 zu ermöglichen.

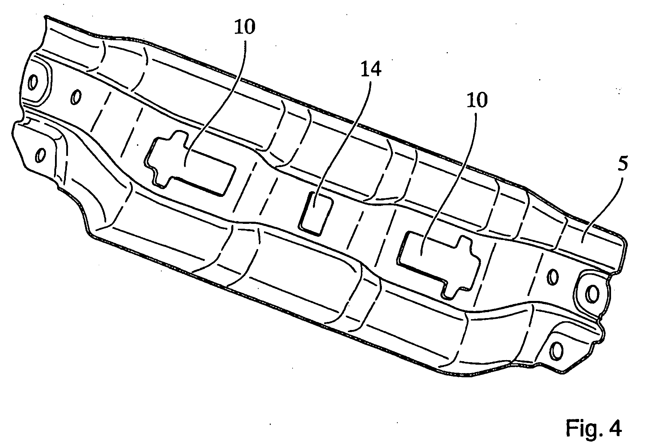

Das zentrale Befestigungselement 4 weist Rasteinrichtungen 13 auf, welche von der dem Sitzinsassen zugewandten Seite des Querträgers 5 her durch eine rechteckige Aussparung 14 (Fig. 4) im Querträger 5 hindurch gesteckt werden und den Querträger 5 hintergreifen. Diese Anordnung ermöglicht auch eine spätere Demontage des Aktuierungsmittels 1.

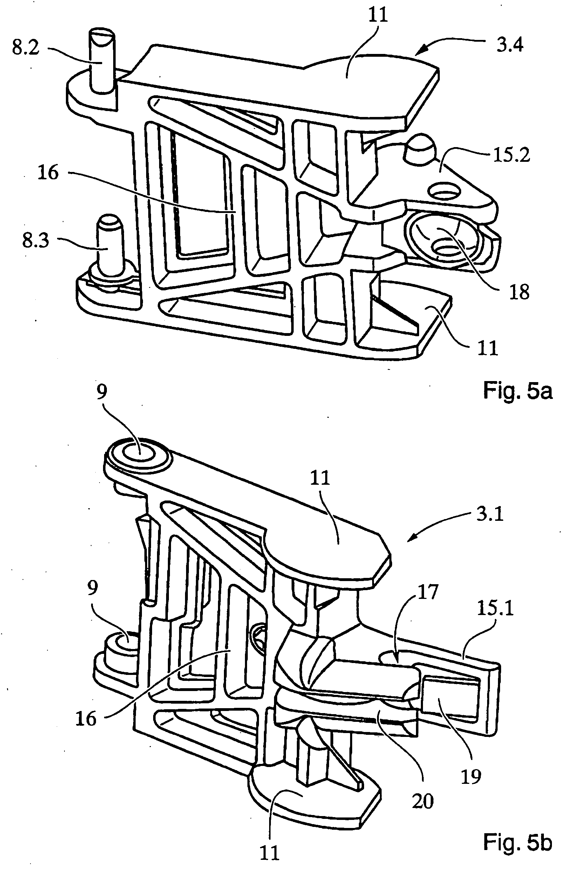

Bei der Ausbildung nach Fig. 5a, b sind der Endfitting der Hülle des Bowdenzugs sowie die dafür vorgesehene Aufnahme 18 des Schenkels 3.4 kugelförmig ausgeformt, so dass die Hülle beim Einstecken des Endfittings nicht relativ zu dem Schenkel 3.4 ausgerichtet werden muss, sondern durch die kugelgelenkartige Verbindung selbstausrichtend ausgebildet ist.

Der an der Seele des Bowdenzugs angebrachte Endfitting ist weiterhin zylindrisch ausgeführt und wird bei der Montage in die dazu passende Aufnahme 17 im Schenkel 3.1 eingesetzt und durch einen federnden, zungenartig in Richtung der Aufnahme 17 auskragenden Clip 19 gesichert. Die Seele wird nachfolgend wie bei der Aufführung nach Fig. 3d in einen Schlitz 20 eingeschwenkt und die Schenkel 3.2, 3.3 auf der Rückseite des Querträgers 5 überspannend zum Schenkel 3.4 hin geführt, wo sie in die Hülle des Bowdenzugs eintritt.

### Bezugszeichen

- 1: Aktuierungsmittel
- 2: Prallplatte
- 3.1 bis 3.4: Schenkel
- 4: Befestigungselement
- 5: Querträger
- 6.1 bis 6.3: Gelenk
- 7.1 bis 7.4: Kulisse
- 8.1 bis 8.3: Zapfen
- 9: Bohrung
- 10: Ausnehmung
- 11: Projektion
- 12: Abkantung
- 13: Rasteinrichtung
- 14: Aussparung
- 15.1, 15.2: Vorsprung
- 16: Stützrippe
- 17: Ausnehmung
- 18: Aufnahme
- 19: Clip
- 20: Schlitz

## Patentansprüche

1. Aktuierungsmittel (1) für die Kopfstütze eines Fahrzeugsitzes, welche bei einem Unfall zumindest in Teilen aus einer Komfortstellung in eine Sicherheitsstellung verlagerbar ist, mit Schenkeln (3.1 bis 3.4), welche infolge Druckbelastung von einer Initiaistellung aus gespreizt werden und damit eine auf Kraftübertragungsmittel übertragbare Längung bewirken, wobei die Schenkel (3.1 bis 3.4) untereinander und/oder an Befestigungselementen durch Gelenke (6.1 bis 6.3) verbunden sind, **dadurch gekennzeichnet, dass** die Gelenke (6.1 bis 6.3) jeweils einen langen Gelenkzapfen (8.3) und einen kurzen Gelenkzapfen (8.2) aufweisen, welche zur Ausbildung der Gelenke (6.1 bis 6.3) axial in Bohrungen (9) einführbar sind.

2. Aktuierungsmittel nach Anspruch 1, **dadurch gekennzeichnet, dass** die äußeren Schenkel (3.1, 3.4) Vorsprünge (15.1, 15.2) aufweisen, welche die Metallstruktur des Fahrzeugsitzes insbesondere im Bereich eines Querträgers (5) von der Insassenseite her nach hinten durchdringen und zur Anbringung eines Kraftübertragungsmittels, insbesondere von Seele und Hülle eines Bowdenzugs, geeignet sind.

## Claims

1. Actuating means (1) for the head restraint of a vehicle seat, at least part of which head restraint can be shifted from a comfort position into a safety position in the event of an accident, comprising limbs (3.1 to 3.4) which are expanded from an initial position as a consequence of pressure loading and therefore bring about a lengthening which can be transmitted to force transmission means, wherein the limbs (3.1 to 3.4) are connected to one another and/or to fastening elements by means of joints (6.1 to 6.3), **characterized in that** the joints (6.1 to 6.3) each have a long joint pin (8.3) and a short joint pin (8.2) which can be inserted axially into holes (9) in order to form the joints (6.1 to 6.3).

2. Actuating means according to Claim 1, **characterized in that** the outer limbs (3.1, 3.4) have projections (15.1, 15.2) which penetrate the metal structure of the vehicle seat, in particular in the region of a crossmember (5) to the rear from the occupant's side and are suitable for the attachment of a force transmission means, in particular the core and sheath of a Bowden cable.

## Revendications

1. Moyen d'actionnement (1) pour l'appui-tête d'un siège de véhicule, qui, dans le cas d'un accident, peut être déplacé au moins en parties d'une position de confort dans une position de sécurité, comprenant des branches (3.1 à 3.4) qui, suite à une sollicitation en pression, sont écartées d'une position initiale et provoquent ainsi un allongement pouvant être transmis à des moyens de transfert de force, les branches (3.1 à 3.4) étant connectées les unes aux autres et/ou à des éléments de fixation par des articulations (6.1 à 6.3), **caractérisé en ce que** les articulations (6.1 à 6.3) présentent chacune un tourillon d'articulation long (8.3) et un tourillon d'articulation court (8.2), qui peuvent être introduits axialement dans des alésages (9) pour réaliser les articulations (6.1 à 6.3).

2. Moyen d'actionnement selon la revendication 1, **caractérisé en ce que** les branches extérieures (3.1 à 3.4) présentent des saillies (15.1, 15.2) qui traversent la structure métallique du siège de véhicule, en particulier dans la région d'une traverse (5), depuis le côté de l'occupant vers l'arrière, et qui sont appropriées pour le montage d'un moyen de transfert de force, en particulier de l'âme et de la gaine d'un câble Bowden.
